# EUROPEAN PATENT SPECIFICATION

(11) **EP 3 357 944 B1**
(45) Date of publication and mention of the grant of the patent: **15.07.2020**
(21) Application number: 16850991.7
(22) Date of filing: 29.08.2016
(51) Int. Cl.: C08F 220/14, C08L 67/04, C08J 5/00, C08F 220/18

(54) **PLASTICIZER FOR POLYLACTIC ACID RESINS, POLYLACTIC ACID RESIN COMPOSITION USING SAID PLASTICIZER AND POLYLACTIC ACID RESIN MOLDED ARTICLE**
WEICHMACHER FÜR POLYMILCHSÄUREHARZE, POLYMILCHSÄUREHARZZUSAMMENSETZUNG MIT DEM WEICHMACHER UND POLYMILCHSÄUREHARZFORMKÖRPER
PLASTIFIANT POUR RÉSINES D'ACIDE POLYLACTIQUE, COMPOSITION DE RÉSINE D'ACIDE POLYLACTIQUE METTANT EN UVRE LEDIT PLASTIFIANT ET ARTICLE MOULÉ EN RÉSINE D'ACIDE POLYLACTIQUE

(30) Priority: 28.09.2015 JP 2015190195
(43) Date of publication of application: 08.08.2018
(73) Proprietor: Soken Chemical & Engineering Co., Ltd., Toshima-ku Tokyo 171-8531 (JP)
(72) Inventor: MATSUMOTO, Hiroto, Sayama-shi Saitama 350-1320 (JP); YABUNAKA, Shinsuke, Sayama-shi Saitama 350-1320 (JP); GOTO, Shu-ichi, Sayama-shi Saitama 350-1320 (JP)
(74) Representative: Dehns
(86) International application number: PCT/JP2016/075152
(87) International publication number: WO 2017/056815

(56) References cited:
- WO-A1-2010/106980
- JP-A- 2001 253 025
- JP-A- 2001 253 025
- JP-A- 2006 265 399
- JP-A- 2008 133 445
- JP-A- 2008 133 445
- JP-A- 2010 066 637
- JP-A- 2014 051 620
- JP-A- 2014 051 620
- US-A1- 2006 223 935

## Description

### Technical Field

The present invention relates to the use of a (meth)acrylic resin as a plasticizer for a polylactic acid resin, a polylactic acid resin composition containing the plasticizer, and a polylactic acid resin formed product.

### Background Art

Because of its biodegradability and low environmental load, polylactic acid resin is expected to be used in various formed products. For example, polylactic acid resin is used as a general-purpose polymer in mobile phone cases and commodities, such as garbage bags, shopping bags, chopsticks, toothbrushes, and heat-proof dishes, and is used as a special polymer in molding resin for 3D printers. Polylactic acid resin is also expected to be used in various sheet-like and film-like products.

However, because polylactic acid resin has crystallinity and is rigid, products formed of polylactic acid resin are generally hard, tend to have low bending strength and cause a crack, and find limited use in applications that require flexibility.

To impart flexibility to polylactic acid resin, the addition of a plasticizer, such as phthalic acid, has been tried. However, the use of a plasticizer, such as phthalic acid, caused a problem, such as a decrease in processing temperature or bleedout of the plasticizer over time.

Some proposed methods for imparting flexibility to polylactic acid resin include a method of adding polyglycerol acetate to polylactic acid resin (see JP 2003-73532 A), a method of adding a glycerin fatty acid ester to polylactic acid resin (see JP 2013-221039 A), a method of adding an adipate plasticizer and an aliphatic polyester to polylactic acid resin (see JP 2014-152193 A), a method of mixing an acrylic block copolymer composed mainly of an acrylate unit and a methacrylate unit with polylactic acid resin to produce a resin composition (see JP 2010-13530 A), a method of adding a methacrylic resin containing another acrylic ester monomer to polylactic acid resin to produce a resin composition (see JP 2014-51620 A), or a method of adding a methacrylic resin and cellulose acetate propionate to polylactic acid resin to produce a resin composition (see JP 2008-133445 A).

However, these methods also have problems of bleedout of a plasticizer over time and a decrease in the forming temperature of polylactic acid resin.

### Summary of Invention

### Technical Problem

It is an object of the present invention to provide a (meth)acrylic resin used as a plasticizer for a polylactic acid resin that has high compatibility with the polylactic acid resin, does not decrease the forming/processing temperature of the polylactic acid resin, and is less likely to bleed from a formed product over time. It is another object of the present invention to provide a polylactic acid resin composition that has high plasticity and formability and can be formed and processed even at high temperatures, and to provide a polylactic acid resin formed product that is formed of the resin composition, has high plasticity, and causes no bleedout of a plasticizer.

### Advantageous Effects of Invention

The present invention can provide a (meth)acrylic resin used as a plasticizer for a polylactic acid resin that has high compatibility with the polylactic acid resin, does not significantly decrease the forming/processing temperature of the polylactic acid resin, and does not bleed for extended periods after forming.

### Description of Embodiments

The present invention will be further described below.

The term "(meth)acryl", as used herein, refers to acryl or methacryl, "(meth)acrylate", as used herein, refers to acrylate or methacrylate, and "(meth)acryloyl", as used herein, refers to acryloyl or methacryloyl.

### <Plasticizer for Polylactic acid Resin>

The (meth)acrylic resin used as a plasticizer in a polylactic acid resin is a copolymer of monomer components containing methyl methacrylate and an alkyl acrylate having an alkyl group having 1 to 8 carbon atoms, and is a resin produced by copolymerization of the monomer components. Thus, a (meth)acrylic resin according to the present invention has a constitutional unit derived from methyl methacrylate and a constitutional unit derived from an alkyl acrylate having an alkyl group having 1 to 8 carbon atoms.

### [Methyl Methacrylate]

In 100 parts by weight of the monomer components constituting the (meth)acrylic resin, the amount of methyl methacrylate to be used generally ranges from 30 to 70 parts by weight, preferably 35 to 60 parts by weight, more preferably 40 to 60 parts by weight. An amount of methyl methacrylate to be used in this range is preferred because the (meth)acrylic resin can have high compatibility with the polylactic acid.

### [Alkyl Acrylate Having Alkyl Group Having 1 to 8 Carbon Atoms]

Examples of the alkyl acrylate having an alkyl group having 1 to 8 carbon atoms include methyl acrylate, ethyl acrylate, propyl acrylate, isopropyl acrylate, n-butyl acrylate, isobutyl acrylate, tert-butyl acrylate, pentyl acrylate, hexyl acrylate, heptyl acrylate, 2-ethylhexyl acrylate, octyl acrylate, and isooctyl acrylate. The number of carbon atoms in the alkyl group generally ranges from 1 to 8, preferably 1 to 6. These may be used alone or in combination.

In 100 parts by weight of the monomer components constituting the (meth)acrylic resin, the amount of the alkyl acrylate having an alkyl group having 1 to 8 carbon atoms to be used generally ranges from 30 to 70 parts by weight, preferably 35 to 60 parts by weight, more preferably 38 to 55 parts by weight. An amount of the alkyl acrylate having an alkyl group having 1 to 8 carbon atoms to be used in this range is preferred because plasticity can be imparted to a product formed from the polylactic acid resin composition, and the formed product does not have a crack after film formation.

### [Monomer Having Functional Group]

The monomer components constituting a (meth)acrylic resin according to the present invention may contain a monomer having a functional group as well as methyl methacrylate and an alkyl acrylate having an alkyl group having 1 to 8 carbon atoms.

Examples of the monomer having a functional group include monomers having a hydroxy group, monomers having an acidic group, monomers having an amino group, and monomers having an amide group. Examples of the acidic group include a carboxy group, an acid anhydride group, a phosphate group, and a sulfate group.

Examples of the monomers having a hydroxy group include (meth)acrylates having a hydroxy group, more specifically, hydroxyalkyl (meth)acrylates, such as 2-hydroxyethyl (meth)acrylate, 2-hydroxypropyl (meth)acrylate, 4-hydroxybutyl (meth)acrylate, 6-hydroxyhexyl (meth)acrylate, and 8-hydroxyoctyl (meth)acrylate.

Examples of monomers having a carboxy group include (meth)acrylates having a carboxy group, such as β-carboxyethyl (meth)acrylate, 5-carboxypentyl (meth)acrylate, mono(meth)acryloyloxyethyl succinate, and ω-carboxy polycaprolactone mono(meth)acrylate; and acrylic acid, methacrylic acid, itaconic acid, crotonic acid, fumaric acid, and maleic acid.

Examples of monomers having an acid anhydride group include maleic anhydride and itaconic anhydride.

Examples of monomers having a phosphate group include (meth)acrylic monomers having a phosphate group in a side chain. Examples of monomers having a sulfate group include (meth)acrylic monomers having a sulfate group in a side chain.

Examples of the monomers having an amino group include (meth)acrylates having an amino group, such as dimethylaminoethyl (meth)acrylate and diethylaminoethyl (meth)acrylate.

Examples of the monomers having an amide group include (meth)acrylamide, N-methyl (meth)acrylamide, N-ethyl (meth)acrylamide, N-propyl (meth)acrylamide, and N-hexyl (meth)acrylamide.

These monomers having a functional group may be used alone or in combination.

In 100 parts by weight of the monomer components constituting the (meth)acrylic resin, the amount of monomer having a functional group generally ranges from 0 to 20 parts by weight, preferably 0.1 to 10 parts by weight, more preferably 0.1 to 5 parts by weight. An amount of monomer having a functional group in this range is preferred because the (meth)acrylic resin can have high compatibility with the polylactic acid.

### [Other Monomer Components]

The monomer components constituting the (meth)acrylic resin may contain other monomer components without losing the objects of the present invention.

Examples of other monomer components include alkyl methacrylates having an alkyl group having 2 to 8 carbon atoms, alkyl (meth)acrylates having an alkyl group having 9 or more carbon atoms, alkoxyalkyl (meth)acrylates, alkoxy poly(alkylene glycol) mono(meth)acrylates, and (meth)acrylates having an alicyclic group.

Examples of the alkyl methacrylates having an alkyl group having 2 to 8 carbon atoms include ethyl methacrylate, propyl methacrylate, isopropyl methacrylate, n-butyl methacrylate, isobutyl methacrylate, tert-butyl methacrylate, pentyl methacrylate, hexyl methacrylate, heptyl methacrylate, 2-ethylhexyl methacrylate, octyl methacrylate, and isooctyl methacrylate.

The alkyl (meth)acrylates having an alkyl group having 9 or more carbon atoms are represented by the formula: CH₂=CR¹-COOR², for example. R¹ denotes a hydrogen atom or a methyl group, and R² denotes an alkyl group having 9 or more carbon atoms. Examples include nonyl (meth)acrylate, isononyl (meth)acrylate, decyl (meth)acrylate, isodecyl (meth)acrylate, undeca (meth)acrylate, lauryl (meth)acrylate, stearyl (meth)acrylate, and isostearyl (meth)acrylate.

Examples of the alkoxyalkyl (meth)acrylates include methoxymethyl (meth)acrylate, 2-methoxyethyl (meth)acrylate, 2-ethoxyethyl (meth)acrylate, 3-methoxypropyl (meth)acrylate, 3-ethoxypropyl (meth)acrylate, 4-methoxybutyl (meth)acrylate, and 4-ethoxybutyl (meth)acrylate.

Examples of the alkoxy poly(alkylene glycol) mono(meth)acrylates include methoxydiethylene glycol mono (meth)acrylate, methoxydipropylene glycol mono (meth)acrylate, ethoxytriethylene glycol mono (meth)acrylate, ethoxydiethylene glycol mono (meth)acrylate, and methoxytriethylene glycol mono (meth)acrylate.

Examples of the (meth)acrylates having an alicyclic group include cyclohexyl (meth)acrylate, isobornyl (meth)acrylate, and adamantyl (meth)acrylate.

These other monomer components may be used alone or in combination.

In 100 parts by weight of the monomer components constituting the (meth)acrylic resin, the amount of other monomer components is 20 parts by weight or less, preferably 10 parts by weight or less, more preferably 5 parts by weight or less.

### <Production of (Meth)acrylic Resin and (Meth)acrylic Resin>

A (meth)acrylic resin according to the present invention is produced by copolymerization of the monomer components.

The (meth)acrylic resin may be produced by any method under any conditions and may be produced by a solution polymerization method, a suspension polymerization method, or an emulsion polymerization method. More specifically, a reaction vessel is charged with a polymerization solvent, monomer components, and, in the case of a suspension polymerization method or an emulsion polymerization method, a dispersion stabilizer or an emulsifier. A polymerization initiator is added in an atmosphere of an inert gas, such as nitrogen gas. The initial reaction temperature is set at 50°C to 90°C. The reaction system is held at a temperature in the range of 50°C to 90°C for 4 to 20 hours to perform the reaction.

In solution polymerization, examples of the polymerization solvent include aromatic hydrocarbons, such as benzene, toluene, and xylene; aliphatic hydrocarbons, such as n-pentane, n-hexane, n-heptane, and n-octane; alicyclic hydrocarbons, such as cyclopentane, cyclohexane, cycloheptane, and cyclooctane; ethers, such as diethyl ether, diisopropyl ether, 1,2-dimethoxyethane, dibutyl ether, tetrahydrofuran, dioxane, anisole, phenyl ethyl ether, and diphenyl ether; halogenated hydrocarbons, such as chloroform, carbon tetrachloride, 1,2-dichloroethane, and chlorobenzene; esters, such as ethyl acetate, propyl acetate, butyl acetate, and methyl propionate; ketones, such as acetone, methyl ethyl ketone, diethyl ketone, methyl isobutyl ketone, and cyclohexanone; amides, such as N,N-dimethylformamide, N,N-dimethylacetamide, and N-methylpyrrolidone; nitriles, such as acetonitrile and benzonitrile; and sulfoxides, such as dimethyl sulfoxide and sulfolane. These polymerization solvents may be used alone or in combination.

In suspension polymerization or emulsion polymerization, an aqueous medium, such as water or a mixture of water and a hydrophilic organic solvent, may be used. Water may be purified water (ion-exchanged water, distilled water, etc.), groundwater, or tap water. Examples of the hydrophilic organic solvent include lower alcohols, such as methanol, ethanol, and isopropanol; polyhydric alcohols, such as ethylene glycol, propylene glycol, butanediol, diethylene glycol, and triethylene glycol; cellosolves, such as methyl cellosolve and ethyl cellosolve; ketones, such as acetone; ethers, such as tetrahydrofuran; and esters, such as methyl formate. The amount of the hydrophilic organic solvent to be added preferably ranges from 0.1 to 10 parts by weight per 100 parts by weight of water. These hydrophilic organic solvents may be used alone or in combination.

Examples of the dispersion stabilizer for use in suspension polymerization or emulsion polymerization include partially saponified poly(vinyl alcohol); completely saponified poly(vinyl alcohol); poly(acrylic acid), copolymers thereof, and neutralized substances thereof; poly(methacrylic acid), copolymers thereof, and neutralized substances thereof; celluloses, such as carboxymethylcellulose and hydroxypropylmethylcellulose; and polyvinylpyrrolidone. These dispersion stabilizers may be used alone or in combination. The amount of the dispersion stabilizer to be used preferably ranges from 0.1 to 5 parts by weight per 100 parts by weight of the monomer components.

Examples of the emulsifier for use in emulsion polymerization include alkyl sulfonates, such as sodium dodecyl sulfonate; alkylbenzene sulfonates, such as sodium dodecylbenzene sulfonate; alpha sulfone fatty acid ester salts, such as 2-sulfotetradecanoic acid 1-methyl ester sodium; poly(ethylene glycol) alkyl ethers, such as poly(ethylene glycol) nonylphenyl ether; and polyoxyethylene alkyl ethers, polyoxyethylene polycyclic phenyl ethers, allyl ether, and salts of sulfates thereof. Among these, sodium dodecyl sulfonate and sodium dodecylbenzene sulfonate are preferred. These emulsifiers may be used alone or in combination. The amount of the emulsifier to be used preferably ranges from 0.1 to 10 parts by weight per 100 parts by weight of the monomer components.

Examples of the polymerization initiator for use in solution polymerization, suspension polymerization, and emulsion polymerization include azo initiators and peroxide initiators. More specifically, the polymerization initiator may be an azo compound, such as 2,2'-azobisisobutyronitrile, or a peroxide, such as benzoyl peroxide or lauroyl peroxide. Among these, azo compounds are preferred. Examples of the azo compounds include 2,2'-azobisisobutyronitrile, 2,2'-azobis(4-methoxy-2,4-dimethylvaleronitrile), 2,2'-azobis(2-cyclopropylpropionitrile), 2,2'-azobis(2,4-dimethylvaleronitrile), 2,2'-azobis(2-methylbutyronitrile), 1,1'-azobis(cyclohexane-1-carbonitrile), 2-(carbamoylazo)isobutyronitrile, 2-phenylazo-4-methoxy-2,4-dimethylvaleronitrile, 2,2'-azobis(2-amidinopropane) dihydrochloride, 2,2'-azobis(N,N'-dimethylene isobutyramidine), 2,2'-azobis[2-methyl-N-(2-hydroxyethyl)-propionamide], 2,2'-azobis(isobutyramide)dihydrate, 4,4'-azobis(4-cyanopentanoic acid), 2,2'-azobis(2-cyanopropanol), dimethyl-2,2'-azobis(2-methylpropionate), and 2,2'-azobis[2-methyl-N-(2-hydroxyethyl)propionamide]. These polymerization initiators may be used alone or in combination. The amount of the polymerization initiator generally ranges from 0.01 to 5 parts by weight, preferably 0.03 to 3 parts by weight, per 100 parts by weight of the monomer components constituting the (meth)acrylic resin. During the polymerization reaction, a polymerization initiator, a chain transfer agent, a monomer component, and a polymerization solvent may be added as required.

As described above, a (meth)acrylic resin according to the present invention is produced by copolymerization of monomer components containing methyl methacrylate and an alkyl acrylate having an alkyl group having 1 to 8 carbon atoms. The monomer components may contain a monomer having a functional group and another monomer component.

Thus, a (meth)acrylic resin according to the present invention has a constitutional unit derived from methyl methacrylate and a constitutional unit derived from an alkyl acrylate having an alkyl group having 1 to 8 carbon atoms, and if necessary has a constitutional unit derived from a monomer having a functional group and a constitutional unit derived from another monomer component.

A (meth)acrylic resin according to the present invention generally has 30 to 70 parts by weight, preferably 35 to 60 parts by weight, of a constitutional unit derived from methyl methacrylate and 30 to 70 parts by weight, preferably 35 to 60 parts by weight, of a constitutional unit derived from an alkyl acrylate having an alkyl group having 1 to 8 carbon atoms per 100 parts by weight of all the constitutional units. The (meth)acrylic resin may contain 20 parts by weight or less, preferably 0.1 to 10 parts by weight, of a constitutional unit derived from a monomer having a functional group. The proportion of each constitutional unit of the (meth)acrylic resin can be controlled by the proportion of monomer components to be used and can therefore be considered to be the same as the proportion of monomer components.

A (meth)acrylic resin according to the present invention generally has a weight-average molecular weight (Mw) in the range of 10,000 to 1,000,000, preferably 100,000 to 500,000. Such a (meth)acrylic resin having Mw in this range can be used as a plasticizer for a polylactic acid to produce a polylactic acid resin composition that has high compatibility with the polylactic acid, imparts plasticity to a formed product, and causes no crack in bending.

A (meth)acrylic resin according to the present invention generally has a molecular weight distribution (Mw/Mn) in the range of 3 to 10, preferably 4 to 9.5, more preferably 4.5 to 9. Such a (meth)acrylic resin having a molecular weight distribution in this range can be used as a plasticizer for a polylactic acid resin to produce a polylactic acid resin composition that has high processability and is processable in the low to high temperature range.

In the present invention, the weight-average molecular weight (Mw) and the molecular weight distribution (Mw/Mn) were determined by gel permeation chromatography (GPC) on the basis of polystyrene standards.

A (meth)acrylic resin (a plasticizer for a polylactic acid resin) according to the present invention characteristically has high compatibility with a polylactic acid resin, imparts appropriate plasticity and flexibility to the polylactic acid resin, and does not significantly decrease the forming/processing temperature of the polylactic acid resin. Furthermore, the (meth)acrylic resin does not bleed from a polylactic acid resin formed product during long-term storage.

### <Polylactic acid Resin Composition>

A polylactic acid resin composition according to the present invention is a composition for producing a product formed of a polylactic acid resin and comprises the polylactic acid resin and the plasticizer for the polylactic acid resin ((meth)acrylic resin).

In the present invention, polylactic acid resin includes polylactic acid, which is a polymer of lactic acid, a lactic acid copolymer produced from lactic acid as a main raw material, and a resin composition containing the lactic acid polymer or copolymer as a main component and another resin. Examples of the lactic acid copolymer include lactic acid-hydroxycarboxylic acid copolymers and lactic acid-aliphatic polyhydric alcohol-aliphatic polybasic acid copolymers. Examples of the resin composition containing the lactic acid polymer or copolymer and another resin include resin compositions containing a polylactic acid polymer and/or copolymer as a main component and another resin component, such as polyolefin. In the present invention, the polylactic acid resin is particularly preferably polylactic acid, which is a homopolymer of lactic acid.

A polylactic acid resin according to the present invention may have any weight-average molecular weight (Mw) and preferably has a weight-average molecular weight (Mw) in the range of 5,000 to 500,000.

In a polylactic acid resin composition according to the present invention, the (meth)acrylic resin content generally ranges from 20 to 80 parts by weight, preferably 30 to 70 parts by weight, more preferably 40 to 70 parts by weight, per 100 parts by weight of the polylactic acid resin. A (meth)acrylic resin content in this range results in no bleedout and the formation of a polylactic acid resin formed product with high plasticity.

A polylactic acid resin composition according to the present invention may contain one or two or more selected from, for example, filler (inorganic filler, organic filler), a flame retardant, an antioxidant, a lubricant, an ultraviolet absorber, an antistatic agent, an anti-fogging agent, a light stabilizer, a pigment, a fungicide, an antimicrobial agent, and a foaming agent, without compromising the objects of the present invention.

### <Polylactic acid Resin Formed Product>

A polylactic acid resin formed product according to the present invention is produced by forming and processing the polylactic acid resin composition.

A forming and processing method may be a known method for forming a resin composition. Examples of such a method include extrusion, injection molding, calendering, grinding, forming with a 3D printer, and drawing.

The forming and processing temperature of a polylactic acid resin composition depends on the characteristics of the polylactic acid resin composition and is generally, but not limited to, in the range of 130°C to 195°C, preferably 135°C to 190°C. A processing temperature of 130°C or less may result in a polylactic acid resin formed product with poor characteristics, such as decreased crystallinity. A processing temperature of 200°C or more may cause difficulties in forming and processing, for example, an excessively soft polylactic acid resin composition for forming.

A polylactic acid resin formed product according to the present invention has appropriate plasticity, flexibility, impact resistance, and flexibility, is less likely to cause a crack, and as compared with formed products containing a known plasticizer, has higher heat resistance, is less likely to cause the bleedout of a plasticizer over time, and is suitable for long-term use.

A polylactic acid resin formed product according to the present invention can be applied to any application. Examples of specific formed products include mobile phone cases, commodities, such as garbage bags, shopping bags, and heat-proof dishes, formed products manufactured with a 3D printer, and sheet-like and film-like products.

### EXAMPLES

Although the present invention will be more specifically described in the following examples, the present invention is not limited to these examples.

### [Measurement and Evaluation Methods]

Various properties in the examples and comparative examples were measured and evaluated by the following methods.

### <Weight-Average Molecular Weight, Molecular Weight Distribution>

The weight-average molecular weight (Mw) and number-average molecular weight (Mn) of (meth)acrylic resins were measured by gel permeation chromatography (GPC) on the basis of polystyrene standards. The molecular weight distribution (Mw/Mn) was calculated from the measurements.
- Measuring apparatus: HLC-8320 GPC (manufactured by Tosoh Corporation)
- GPC column structure: the following four columns (manufactured by Tosoh Corporation)
   (1) TSKgel HxL-H (guard column)
   (2) TSKgel GMHxL
   (3) TSKgel GMHxL
   (4) TSKgel G2500HxL
- Flow rate: 1.0 mL/min
- Column temperature: 40°C
- Sample concentration: 1.5%(w/v) (diluted with tetrahydrofuran)
- Mobile phase solvent: tetrahydrofuran

### [Production Example 1]

A reactor equipped with a stirrer, a reflux condenser, a thermometer, and a nitrogen inlet was charged with 50 parts by weight of methyl methacrylate (MMA), 50 parts by weight of butyl acrylate (BA), and 100 parts by weight of an ethyl acetate solvent and was heated to 75°C under nitrogen gas. Subsequently, 0.06 parts by weight of 2,2'-azobisisobutyronitrile (AIBN) was added to initiate a polymerization reaction at 75°C in a nitrogen gas atmosphere. After 2 hours, 1.2 parts by weight of AIBN was added, and the reaction was completed 12 hours after the initiation of the polymerization reaction, thus producing a (meth)acrylic resin solution. After the completion of the reaction, the solvent of the (meth)acrylic resin solution was volatilized with a dryer at 90°C for 12 hours. Thus, a (meth)acrylic resin (A) with a weight-average molecular weight (Mw) of 300,000 and a molecular weight distribution (Mw/Mn) of 4.5 was obtained.

### [Production Examples 2 to 4]

(Meth)acrylic resins (B) to (D) were produced in the same manner as in Production Example 1 except that monomer components listed in Table 1 were used in the polymerization reaction. Table 1 shows the results.

### [Production Example 5]

A reactor equipped with a stirrer, a reflux condenser, a thermometer, and a nitrogen inlet was charged with 100 parts by weight of methyl methacrylate (MMA) and 100 parts by weight of an ethyl acetate solvent and was heated to 75°C under nitrogen gas. Subsequently, 0.1 parts by weight of n-dodecyl mercaptan (NDM) and 0.03 parts by weight of AIBN were added to initiate a polymerization reaction at 75°C in a nitrogen atmosphere. After 2 hours, 0.3 parts by weight of AIBN was added, and the reaction was completed 12 hours after the initiation of the polymerization reaction, thus producing a (meth)acrylic resin solution. After the completion of the reaction, the solvent of the (meth)acrylic resin solution was volatilized with a dryer at 90°C for 12 hours. Thus, a (meth)acrylic resin (E) with Mw of 300,000 and Mw/Mn of 4.5 was obtained.

### [Production Example 6]

A (meth)acrylic resins (F) was produced in the same manner as in Production Example 5 except that monomer components listed in Table 1 were used in the polymerization reaction. Table 1 shows the results.

### [Production Example 7]

A reactor equipped with a stirrer, a reflux condenser, a thermometer, and a nitrogen inlet was charged with 50 parts by weight of methyl methacrylate (MMA), 50 parts by weight of butyl acrylate (BA), and 60 parts by weight of an ethyl acetate solvent and was heated to 75°C under nitrogen gas. Subsequently, 0.12 parts by weight of AIBN was added to initiate a polymerization reaction at 75°C in a nitrogen gas atmosphere. After 3 hours, the reaction was completed, and a (meth)acrylic resin solution was obtained. After the completion of the reaction, the solvent of the (meth)acrylic resin solution was volatilized with a dryer at 140°C for 24 hours. Thus, a (meth)acrylic resin (G) with Mw of 330,000 and Mw/Mn of 2.5 was obtained.

### [Production Example 8]

A reactor equipped with a stirrer, a reflux condenser, a thermometer, and a nitrogen inlet was charged with 10 parts by weight of methyl methacrylate (MMA), 10 parts by weight of butyl acrylate (BA), and 25 parts by weight of an ethyl acetate polymerization solvent and was heated to 75°C under nitrogen gas. Subsequently, 0.02 parts by weight of AIBN was added to initiate a polymerization reaction at 75°C in a nitrogen gas atmosphere. Every 12 hours after the initiation of the polymerization reaction, an operation consisting of adding 10 parts by weight of MMA, 10 parts by weight of BA, and 15 parts by weight of ethyl acetate and then 0.02 parts by weight of AIBN was performed. The adding operation was performed a total of three times. At 48 hours after the initiation of the reaction, 10 parts by weight of MMA, 10 parts by weight of BA, and 15 parts by weight of ethyl acetate were added, and then 0.42 parts by weight of AIBN was added. The reaction was completed after 12 hours, and a (meth)acrylic resin solution was obtained. After the completion of the reaction, the solvent of the (meth)acrylic resin solution was volatilized with a dryer at 90°C for 12 hours. Thus, a (meth)acrylic resin (H) with Mw of 380,000 and Mw/Mn of 12.1 was obtained.

### [Table 1]

**Table 1**

| | | Production example 1 | Production example 2 | Production example 3 | Production example 4 | Production example 5 | Production example 6 | Production example 7 | Production example 8 |
|---|---|---|---|---|---|---|---|---|---|
| (Meth)acrylic resin | | (A) | (B) | (C) | (D) | (E) | (F) | (G) | (H) |
| Monomer components | Methyl methacrylate | 50 | 50 | 49 | | 100 | | 50 | 50 |
| | Butyl acrylate | 50 | | 49 | 50 | | 100 | 50 | 50 |
| | Ethyl acrylate | | 50 | | | | | | |
| | Methyl acrylate | | | | 50 | | | | |
| | 2-Hydroxyethyl methacrylate | | | 2 | | | | | |
| Mw (x 10,000) | | 30 | 30 | 30 | 30 | 30 | 30 | 33 | 38 |
| Mw / Mn | | 4.5 | 4.5 | 4.5 | 3.5 | 4.5 | 3.5 | 2.5 | 12.1 |

### [Example 1]

60 parts by weight (solid content) of a polylactic acid (Terramac TP-4000: manufactured by Unitika Ltd.) and 40 parts by weight (solid content) of the plasticizer (meth)acrylic resin (A) produced in Production Example 1 were melt-kneaded in a Banbury mixer to prepare a resin composition for producing a formed product. The resin composition was then calendered to a thickness of 50 µm with an inverted-L four-roll calender (a melt film formation process). Immediately after the melt film formation process, the melt-formed resin composition film was alternately passed through the upper and lower nips of three rolls (take-off rolls) that could be heated to a desired temperature, thereby accelerating crystallization (a crystallization acceleration process). Subsequently, the resin composition was solidified with chill rolls and was formed and processed into a film, thus producing a polylactic acid resin formed product. Table 2 shows the composition of each resin composition and the evaluation results.

### [Examples 2 and 3, Comparative Examples 1 to 7]

A polylactic acid resin formed product was produced in the same manner as in Example 1 except that the components were mixed at the ratio listed in Table 2. Table 2 shows the results. In Comparative Example 5, the polylactic acid and the (meth)acrylic resin (F) had poor compatibility and could not form a homogeneous resin composition for forming and processing.

### <Compatibility>

The formed films of the examples and comparative examples were visually observed and were rated according to the following criteria.
AA: No cloudiness or dullness was observed.
BB: Cloudiness or dullness was observed.

### <Bleedout>

The formed films of the examples and comparative examples were left standing at 70°C for 4 days, were cooled to room temperature (25°C), were visually checked for bleedout of the plasticizer, and were rated according to the following criteria.
AA: No bleedout on the surface of the formed product.
BB: Bleedout on the surface of the formed product.

### <Plasticity (Bending Test)>

The formed films of the examples and comparative examples were subjected to a 180-degree bending test and were rated in terms of plasticity according to the following criteria.
AA: No crack or cloudiness by bending.
BB: Crack or cloudiness by bending.

### <Processing Temperature>

The forming and processing temperature was increased by 5°C each time. The maximum temperature at which forming and processing could be smoothly performed was taken as the processing temperature.

### [Table 2]

**Table 2**

| | | Example 1 | Example 2 | Example 3 | Comparative example 1 | Comparative example 2 | Comparative example 3 | Comparative example 4 | Comparative example 5 | Comparative example 6 | Comparative example 7 |
|---|---|---|---|---|---|---|---|---|---|---|---|
| Polylactic acid | | 60 | 60 | 60 | 100 | 90 | 60 | 60 | 60 | 60 | 60 |
| Plasticizer | (Meth)acrylic resin (A) | 40 | | | | | | | | | |
| | (Meth)acrylic resin (B) | | 40 | | | | | | | | |
| | (Meth)acrylic resin (C) | | | 40 | | | | | | | |
| | (Meth)acrylic resin (D) | | | | | | 40 | | | | |
| | (Meth)acrylic resin (E) | | | | | | | 40 | | | |
| | (Meth)acrylic resin (F) | | | | | | | | 40 | | |
| | (Meth)acrylic resin (G) | | | | | | | | | 40 | |
| | (Meth)acrylic resin (H) | | | | | | | | | | 40 |
| | DOP (2-ethylhexyl phthalate) | | | | | 10 | | | | | |
| Compatibility | | AA | AA | AA | | AA | AA | AA | BB | BB | AA |
| Bleedout | | AA | AA | AA | | BB | BB | AA | BB | AA | AA |
| Plasticity (bending) | | AA | AA | AA | BB | AA | AA | BB | - | BB | BB |
| Processing temperature [°C] | | 150 | 155 | 155 | 160 | 120 | 130 | 160 | - | 200 | 125 |

Table 2 shows that a polylactic acid resin composition that contains a (meth)acrylic resin as a plasticizer that is a copolymer of methyl methacrylate and an alkyl acrylate and has a weight-average molecular weight in the range of 10,000 to 1,000,000 and a molecular weight distribution in the range of 3 to 10, the polylactic acid resin composition having high compatibility between the plasticizer and a polylactic acid resin, being formable at a high processing temperature, and being able to be suitably used to produce a polylactic acid resin formed product that causes no bleedout and has high plasticity.

### Industrial Applicability

A plasticizer for a polylactic acid resin according to the present invention can be used to impart plasticity to the polylactic acid resin. A resin composition containing a plasticizer for a polylactic acid resin according to the present invention can be used to produce various polylactic acid resin formed products. Examples of the polylactic acid resin formed products include mobile phone cases, commodities, such as garbage bags, shopping bags, chopsticks, toothbrushes, and heat-proof dishes, formed products manufactured with a 3D printer, sheets, and films.

## Claims

1. The use of a (meth)acrylic resin as a plasticizer for a polylactic acid resin,
wherein the (meth)acrylic resin is
a copolymer of monomer components containing 30 to 70 parts by weight of methyl methacrylate and 30 to 70 parts by weight of an alkyl acrylate having an alkyl group having 1 to 8 carbon atoms (the monomer components are 100 parts by weight in total), and
has a weight-average molecular weight in the range of 10,000 to 1,000,000 and a molecular weight distribution in the range of 3 to 10, as determined by gel permeation chromatography on the basis of polystyrene standards.

2. The use according to Claim 1, wherein the monomer components contain a monomer having a functional group.

3. The use according to Claim 1 or 2, wherein the (meth)acrylic resin has a weight-average molecular weight in the range of 100,000 to 500,000 as determined by gel permeation chromatography.

4. A polylactic acid resin composition comprising:
a (meth)acrylic resin plasticizer for a polylactic acid resin, wherein the (meth)acrylic resin is
a copolymer of monomer components containing 30 to 70 parts by weight of methyl methacrylate and 30 to 70 parts by weight of an alkyl acrylate having an alkyl group having 1 to 8 carbon atoms (the monomer components are 100 parts by weight in total), and
has a weight-average molecular weight in the range of 10,000 to 1,000,000 and a molecular weight distribution in the range of 3 to 10, as determined by gel permeation chromatography on the basis of polystyrene standards;
and a polylactic acid resin.

5. A polylactic acid resin formed product comprising the polylactic acid resin composition according to Claim 4.

## Patentansprüche

1. Verwendung eines (Meth)acrylharzes als Weichmacher für ein Polymilchsäureharz,
wobei das (Meth)acrylharz
ein Copolymer aus Monomerkomponenten ist, das 30 bis 70 Gewichtsteile Methylmethacrylat und 30 bis 70 Gewichtsteile eines Alkylacrylats enthält, das eine Alkylgruppe aufweist, die 1 bis 8 Kohlenstoffatome aufweist (wobei die Monomerkomponenten insgesamt 100 Gewichtsteile sind), und
ein gewichtsmittleres Molekulargewicht im Bereich von 10.000 bis 1.000.000 und eine Molekulargewichtsverteilung im Bereich von 3 bis 10, wie durch Gelpermeationschromatographie auf der Basis von Polystyrolstandards bestimmt, aufweist.

2. Verwendung nach Anspruch 1, wobei die Monomerkomponenten ein Monomer mit einer funktionellen Gruppe enthalten.

3. Verwendung nach Anspruch 1 oder 2, wobei das (Meth)acrylharz ein gewichtsmittleres Molekulargewicht im Bereich von 100.000 bis 500.000, wie durch Gelpermeationschromatographie bestimmt, aufweist.

4. Polymilchsäureharzzusammensetzung, umfassend:
einen (Meth)acrylharz-Weichmacher für ein Polymilchsäureharz, wobei das (Meth)acrylharz
ein Copolymer aus Monomerkomponenten ist, das 30 bis 70 Gewichtsteile Methylmethacrylat und 30 bis 70 Gewichtsteile eines Alkylacrylats enthält , das eine Alkylgruppe aufweist, die 1 bis 8 Kohlenstoffatome aufweist (wobei die Monomerkomponenten insgesamt 100 Gewichtsteile sind), und
ein gewichtsmittleres Molekulargewicht im Bereich von 10.000 bis 1.000.000 und eine Molekulargewichtsverteilung im Bereich von 3 bis 10, wie durch Gelpermeationschromatographie auf der Basis von Polystyrolstandards bestimmt, aufweist;
und ein Polymilchsäureharz.

5. Aus Polymilchsäureharz gebildetes Produkt, umfassend die Polymilchsäureharzzusammensetzung nach Anspruch 4.

## Revendications

1. Utilisation d'une résine (méth)acrylique en tant que plastifiant pour une résine d'acide polylactique,
dans laquelle la résine (méth)acrylique est
un copolymère de composants monomères contenant de 30 à 70 parties en poids de méthacrylate de méthyle et de 30 à 70 parties en poids d'un acrylate d'alkyle présentant un groupe alkyle possédant de 1 à 8 atomes de carbone (les composants monomères représentent 100 parties en poids au total), et
a un poids moléculaire moyen en poids se situant dans la plage allant de 10 000 à 1 000 000 et une distribution de poids moléculaire situé dans la plage allant de 3 à 10, comme déterminé par la chromatographie par perméation de gel sur la base de normes sur le polystyrène.

2. Utilisation selon la revendication 1, dans laquelle les composants monomères contiennent un monomère possédant un groupe fonctionnel.

3. Utilisation selon la revendication 1 ou 2, dans laquelle la résine (méth)acrylique a un poids moléculaire moyen en poids situé dans la plage allant de 100 000 à 500 000 comme déterminé par la chromatographie par perméation de gel.

4. Composition à base de résine d'acide polylactique comprenant :
un plastifiant de résine (méth)acrylique pour une résine d'acide polylactique, dans laquelle la résine (méth)acrylique est
un copolymère de composants monomères contenant de 30 à 70 parties en poids de méthacrylate de méthyle et de 30 à 70 parties en poids d'un acrylate d'alkyle présentant un groupe alkyle possédant de 1 à 8 atomes de carbone (les composants monomères représentent 100 parties en poids au total), et
a un poids moléculaire moyen en poids se situant dans la plage allant de 10 000 à 1 000 000 et une distribution de poids moléculaire situé dans la plage allant de 3 à 10, comme déterminé par la chromatographie par perméation de gel sur la base de normes sur le polystyrène ;
et une résine d'acide polylactique.

5. Produit formé à partir de résine d'acide polylactique comprenant la composition à base de résine d'acide polylactique selon la revendication 4.
